# EUROPÄISCHE PATENTSCHRIFT

(11) **EP 1 595 442 B1**
(45) Veröffentlichungstag und Bekanntmachung des Hinweises auf die Patenterteilung: **29.10.2008**
(21) Anmeldenummer: 05009891.2
(22) Anmeldetag: 06.05.2005
(51) Int. Cl.: A01F 15/07

(54) **Maschine zum Aufnehmen und Pressen von landwirtschaftlichem Erntegut**
Device for picking up and pressing of harvested agricultural crop
Dispositif pour ramasser et compacter des matières récoltées

(30) Priorität: 11.05.2004 DE 102004023702
(43) Veröffentlichungstag der Anmeldung: 16.11.2005
(73) Patentinhaber: Maschinenfabrik Bernard Krone GmbH, 48480 Spelle (DE)
(72) Erfinder: Krone, Bernard Dr.-Ing. E.h., 48480 Spelle (DE); Martensen, Klaus Dr.-Ing., 48477 Hörstel (DE); Wilmes, August Dipl.-Ing., 48477 Hörstel (DE); van Bassen, Alois, 49832 Freren (DE)

(56) Entgegenhaltungen:
- FR-A- 2 647 630
- US-A- 4 224 867
- US-A- 4 246 743
- US-A- 5 226 359

## Beschreibung

Die Erfindung betrifft eine Maschine zum Aufnehmen und Pressen von landwirtschaftlichem Erntegut mit einer von zumindest einer Ballenformeinrichtung gebildeten Wickelkammer zur Erzeugung eines rollenförmigen Ballens, wobei die Ballenformeinrichtung über zumindest eine ortsfeste Antriebsrolle geführt ist und während einer Ballenformphase eine Wickelkammer ausbildet, welche sich von einer, ein geringes Volumen an Erntegut aufnehmenden Größe in eine ein größeres Volumen aufnehmende Größe ausdehnen kann, und die mindestens eine Messvorrichtung aufweist.

Bekannt sind Maschinen zum Aufnehmen und Pressen von landwirtschaftlichem Erntegut, die eine Messvorrichtung zur Aufnahme von insbesondere Ballenkenngrößen wie Pressdichte des Ballens oder anliegendem Pressdruck aufweisen. Die Vielzahl der von solchen Ballenkenngrößen im Laufe des Ballenformvorganges durchlaufenden Größenordnungen sind hierbei für aufwendig einzustellende und damit teure Messvorrichtungen verantwortlich.

Aus der US 5,226,359 A ist eine Ballenpresse zur Herstellung von zylindrischen Ballen bekannt geworden, bei der durch endlos umlaufende Riemen eine Wickelkammer ausgebildet ist, welche der Formung und Verdichtung des aufgenommenen Erntegutes zu zylindrischen Ballen dient. Über einen die endlosen Riemen umlenkenden Spannarm wird eine Presskraft aufgebaut, die die Verdichtung des Erntegutes bestimmt, wobei die hier maßgebliche Ballenformphase sich von Beginn der Ballenbildung bis zum Erreichen einer vorwählbaren Ballengröße erstreckt. Während der gesamten Ballenformphase muss eine hohe Presskraft bereitgestellt werden, so dass jederzeit bzw. bei jeder beliebigen Ballengröße die weitere Ballenbildung beendet werden kann und somit der bis dahin geformte Ballen als fertiggestellter Ballen aus der Ballenpresse ausgeworfen werden kann. Die hier verwendete und dem Spannarm zugeordnete Messeinrichtung ermöglicht die laufende Ermittlung der aktuellen Ballengröße.

Eine weitere Ausführungsform einer Ballenpresse zur Herstellung von zylindrischen Ballen ist in der US 4,224,867 A näher veranschaulicht. Auch die hier beschriebene Ballenpresse arbeitet nach dem Prinzip, bei dem während der gesamten Ballenformphase unter permanenter Bereitstellung einer hohen Presskraft jederzeit bzw. bei jeder beliebigen Ballengröße die weitere Ballenbildung beendet werden kann und somit der bis dahin geformte Ballen als fertiggestellter Ballen aus der Ballenpresse ausgeworfen werden kann. Den beiden zitierten Ballenpressen aus dem Stand der Technik haftet dabei der Mangel an, dass ihr Aufbau und ihre Funktionsweise einen hohen konstruktiven und damit auch einen kostenintensiven Aufwand verlangt.

Es ist Aufgabe der vorliegenden Erfindung, eine Maschine zum Aufnehmen und Pressen von landwirtschaftlichem Erntegut, insbesondere bezüglich ihrer Messvorrichtung zu verbessern.

Die Aufgabe wird gelöst durch eine Maschine nach dem Oberbegriff des Anspruchs 1, bei der nach der Ballenformphase auf den Ballen der Wickelkammer von außen nach innen eine Verdichtungskraft ausgeübt wird und eine automatisch aktivierbare Messvorrichtung Teil eines Stellmittels ist, welches ein Begrenzungselement und ein Widerlager als gehäusefeste Abstützung umfasst und nach Abschluss der Ballenformphase des Emtegutballens in der Verdichtungsphase die weitere Freigabe der Ballenformeinrichtung aus einem Speicher begrenzt, wobei der Zeitpunkt einer Aktivierung einer Messvorrichtung zur Ermittlung von Ballenkenngrößen innerhalb eines Zeitraumes liegt, der bereits während der Ballenformphase beginnt und sich bis zum Ende der Ballenformphase erstreckt. Somit kann der Zeitpunkt der Aktivierung der Messvorrichtung variabel gestaltet werden, wobei etwa bei einer Aktivierung während der Ballenformphase eine exaktere Befüllung der Wickelkammer bei kleinen Erntegutschwaden erreichbar ist oder bei einer Aktivierung erst gegen Ende des Ballenformvorgangs zur Bildung eines Rundballens aus großen Strohschwaden die zu verwendende Messvorrichtung dann nur während einer kürzeren Phase verwendet wird. Entsprechend wird die Messvorrichtung verschleißfreier arbeiten können und kann daher beispielsweise einfacher und somit kostengünstiger hergestellt werden.

Bei einer vorteilhaften Ausgestaltung der Erfindung ist die Messvorrichtung Teil eines Stellmittels, welches nach Abschluss der Ballenformphase die weitere Freigabe der Ballenformeinrichtung aus einem Speicher begrenzt. Bei beispielsweise dem Pressdruck als aufzunehmender Ballenkenngröße kann diese somit genau in dem Bereich abgegriffen werden, in dem die vom Gehäuse abzustützenden Kräfte direkt in dieses übertragen werden, was eine direkte und entsprechend genaue Art der Messung der aufzunehmenden Größen darstellt.

Sinnvollerweise weist eine erfindungsgemäße Maschine in Fahrtrichtung links und rechts des Zentrums des Erntegutballens Messvorrichtungen auf, um lokal unterschiedliche Ballenkenngrößen zu messen. So kann beispielsweise festgestellt werden, ob es aufgrund nicht mittiger Aufnahme eines Erntegutschwadens zu einer ungleichmäßigen Ausbildung eines dann nicht exakt zylindrischen Erntegutballens kommt.

Es ist weiterhin von Vorteil, wenn die Messvorrichtung Mittel zur Anzeige und/oder Speicherung und/oder Übermittlung der Ballenkenngrößen aufweist, um eine unmittelbare Überprüfung der aufgenommenen Messwerte zu ermöglichen, gleich wohl ist aber auch die Möglichkeit vorzusehen, dieses gegebenenfalls später durchzuführen. Hierfür kann es sich bei den zur Anzeige und/oder Speicherung und/oder Übermittlung verwendeten Vorrichtungen auch um zumindest eine Datenverarbeitungsanlage handeln, die die einzelnen Ballenkenngrößen, die während einer längeren Arbeitsphase der Maschine gemessen werden, zu einem späteren Zeitpunkt weiter verarbeitet.

Statt eine Aktivierung der erfindungsgemäßen Maschine durch das Bedienpersonal vorzusehen, liegt es ebenfalls im Rahmen der Erfindung, wenn sich die Messvorrichtung automatisch zum Abschluss der Ballenformphase bzw. unmittelbar davor selbstständig aktiviert. Das Bedienpersonal ist damit entlastet.

Zur weitgehenden Vermeidung von Schlupf zwischen Ballenformeinrichtung und Antriebsrolle ist der Speicher außerdem vorzugsweise so ausgebildet, dass er gegen die Kraftbeaufschlagung der Ballenformeinrichtung durch eine Spannvorrichtung des Speichers bei gleichzeitig minimalem Pressdruck auf den sich bildenden Erntegutballen solange Teile der Ballenformeinrichtung frei gibt, bis der vorgebbare Durchmesser erreicht ist und sich aufgrund der Wirkstellung eines Stellmittels der Pressdruck um ein Vielfaches erhöht. Hierdurch wird in besonderer Weise gewährleistet, dass während der Ballenformphase die Ballenformeinrichtung zwar an dem in die Wickelkammer eingeführten Material anliegt und somit für eine sichere Rotation und damit eine gleichmäßige Ballenbildung des Erntegutballens sorgt. Bei einer Aktivierung der Messvorrichtung während dieser Ballenformphase ist die gemessene Ballenkenngröße verständlicherweise einer dem Ballendurchmesser entsprechenden Größe. Bei einer Aktivierung am Ende der Ballenformphase dagegen stellt die gemessene Ballenkenngröße ein Signal dar, welches dem Pressdruck entspricht.

Weitere Vorteile und Einzelheiten der Erfindung ergeben sich aus den übrigen Unteransprüchen sowie den nachfolgend beschriebenen schematischen Darstellungen. In der Zeichnung zeigt:
- Figur 1:: Einen Längsschnitt einer erfindungsgemäßen Maschine in einer einen minimalen Erntegutballen ausbildenden Stellung,
- Figur 2:: Den Gegenstand nach Figur 1 in einer einen maximalen Erntegutballen ausbildenden Stellung,
- Figur 3:: Die Messvorrichtung des Wickelbodenspeichers des Gegenstands nach Figur 1 in einer ausgebrochenen, vergrößerten Darstellung,
- Figur 4:: Einen Längsschnitt einer weiteren Ausführungsform der erfindungsgemäßen Maschine in einer einen minimalen Erntegutballen ausbildenden Stellung,
- Figur 5:: Den Gegenstand nach Figur 4 in einer einen maximalen Erntegutballen ausbildenden Stellung,

Eine erfindungsgemäße Maschine 1 zum Aufnehmen und Pressen von landwirtschaftlichen Erntegut weist eine Ballenformeinrichtung 2 auf, die eine Wickelkammer 3 ausbildet. Die Wickelkammer 3 besitzt eine Einlassöffnung 4, durch die allgemein mit einer Aufnahmevorrichtung 6 aufgenommenes Erntegut wie beispielsweise Heu oder Anwelkgut in die Wickelkammer 3 befördert werden kann. Eine Antriebsrolle 7 unterteilt die Ballenformeinrichtung 2 in ein Lasttrum 8 und ein Leertrum 9, wobei sich Lasttrum 8 und Leertrum 9 durch die auf den sich bildenden Erntegutballen wirkenden Antriebsmomente unterscheiden. Beiderseits der Einlassöffnung 4 angeordnete Walzen 11 begrenzen zusätzlich die Wickelkammer 3. Zu Beginn eines Ballenformvorgangs liegt das Lasttrum 8 der Ballenformeinrichtung 2 zusätzlich an eine Startkammer ausbildenden Führungsvorrichtungen 12 an. Bei diesem Ausführungsbeispiel sind die Führungsvorrichtungen 12 als Umlenkrollen ausgebildet, es kann sich hierbei jedoch beispielsweise auch um eine oder mehrere Führungsflächen handeln.

Die Ballenformeinrichtung 2 wird mit Hilfe eines Kraftspeichers 13 des Speichers 14 unter Spannung gehalten. Dadurch liegen bei Beginn der Erntegutaufnahme die zwischen der Antriebsrolle 7 und einer Umlenkrolle 16 befindlichen Abschnitte des Lasttrums 8 der Ballenformeinrichtung 2 annähernd parallel zu den Seitenkanten 17 der die Wickelkammer 3 begrenzten Führungsseitenwände.

Der Speicher 14 weist im wesentlichen einen mit einer Umlenkrolle 18 versehenen Spannarm 19 auf, an den der als Federelement ausgebildete Kraftspeicher 13 angreift. Füllt sich die Wickelkammer 3 mit Erntegut, so wird ein nach außen gerichteter Druck auf das Lasttrum 8 ausgeübt und das Federelement 13 wird gestaucht. Dabei ändert sich die zwischen Umlenkrolle 21 und Umlenkrolle 18 verlaufende Länge der Ballenformeinrichtung 2 und die Erntegutballenvergrößerung geht einher mit einer Vergrößerung der Wickelkammer 3. Diese Erntegutballenvergrößerung wird als Ballenformphase bezeichnet.

Der Speicher 14 weist ein mit 22 bezeichnetes Stellmittel auf, welches ein Begrenzungselement 23 und ein Widerlager 24 als gehäusefeste Abstützung umfasst.

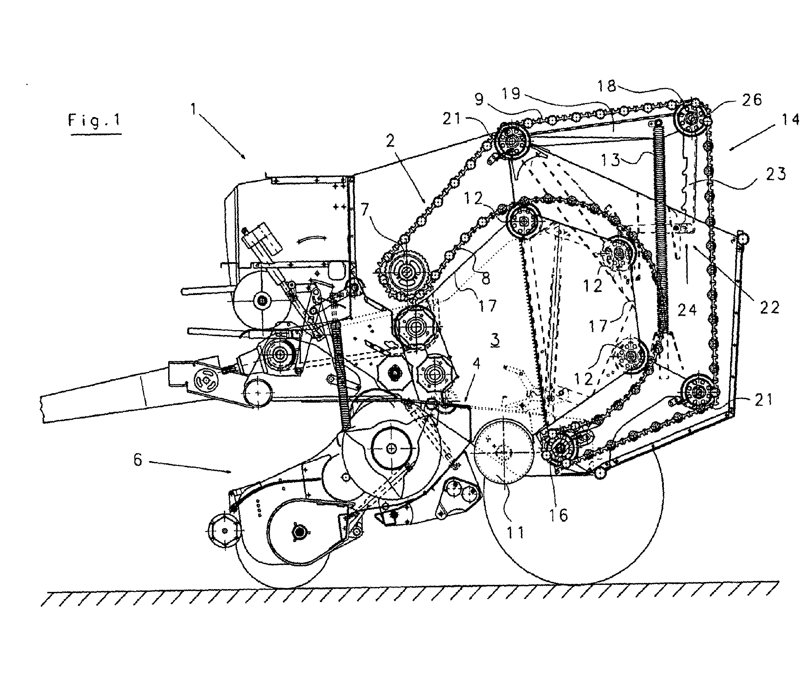

In der in Figur 1 dargestellten Wirkstellung des Begrenzungselements 23 greift dieses mit einer Ausnehmung an seinem unteren Ende in das Widerlager 24 ein. Hierdurch wird die weitere Freigabe der Ballenformeinrichtung 2, bzw. ihrer Länge aus dem Speicher 14 verhindert, so dass es zur Ausbildung eines minimalen Erntegutballens kommt. Die vorher von dem Kraftspeicher 13, der hier ein Federelement ist, auf die Ballenformeinrichtung 2 ausgeübte Spannung wirkt nun nur noch zusätzlich zur Begrenzung, da das Stellmittel 22 die weitere Kontraktion des Kraftspeichers weitgehend verhindert.

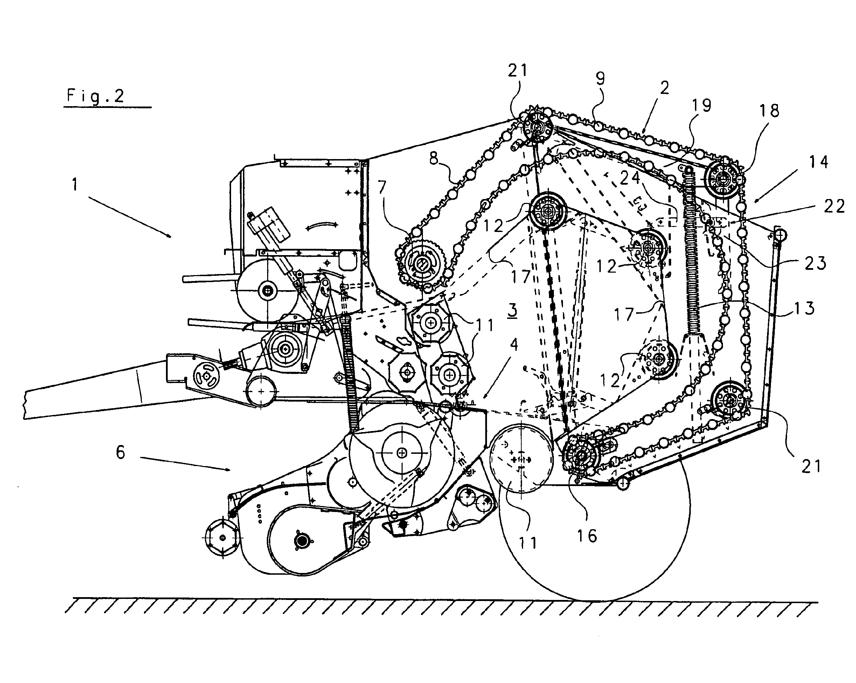

Aufgrund einer geringfügig geänderten Position des Begrenzungselements 23 bezüglich des Spannarms 19, d.h. einer leichten Verschwenkung um die Drehachse 26 der Umlenkrolle 18, befindet sich in Figur 2 das Widerlager 24 in Eingriff mit einem weiter oben befindlichen Bereich des Begrenzungselements 23. Dadurch kann der Kraftspeicher 13 weiter kontraktieren und der Speicher 14 gibt mehr Länge frei, so dass ein größerer Erntegutballen in der Wickelkammer 3 gebildet werden kann.

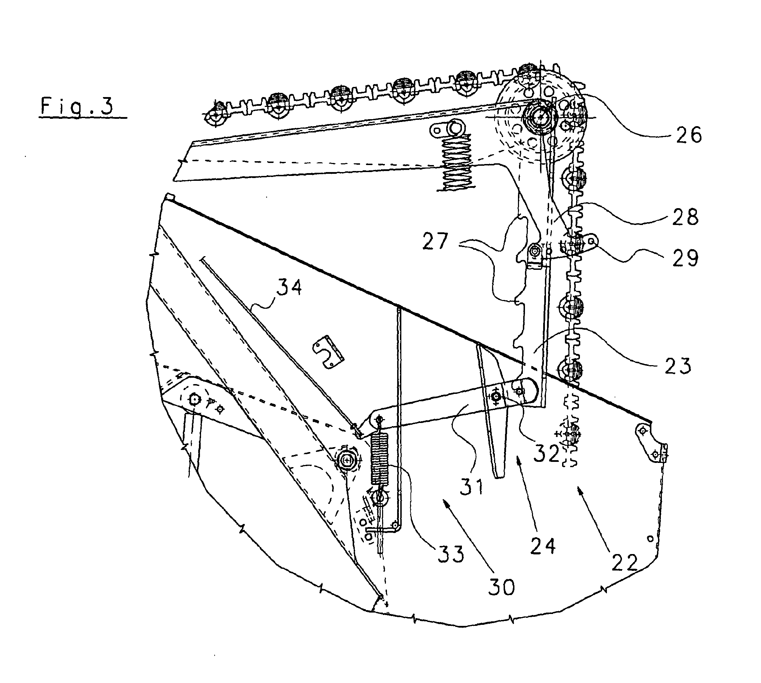

In Figur 3 ist das Stellmittel 22 des Wickelbodenspeichers 14 deutlicher dargestellt. Um eine zuverlässige Abstützung der auftretenden Kräfte am Gehäuse der Maschine 1 zu gewährleisten, ist das Begrenzungselement 23 zumindest auf einer Seite im Bereich der Umlenkrolle 18 des Spannarms 19 angeordnet. Dieses ist von Vorteil, da die auftretenden, an der Ballenformeinrichtung 2 anliegenden Kräfte über die Umlenkrolle 18 in den Spannarm 19 und das Begrenzungselement 23 geleitet und gemeinsam abgestützt werden.

Gleichzeitig ist das Begrenzungselement 23 um eine Achse 26, die der Drehachse der Umlenkrolle 18 entspricht, verschwenkbar. Aufgrund der unterschiedlichen Winkel, die das Begrenzungselement 23 relativ zum Spannarm 19 einnehmen kann, kann das Begrenzungselement 23 somit in den unterschiedlichen von den Nasen 27 ausgebildeten Bereichen in Anlage mit dem Widerlager 24 gelangen. Entsprechend werden unterschiedliche Längen der Ballenformeinrichtung 2 freigegeben und es baut sich ein Pressdruck erst bei unterschiedlichen, vorgebbaren Ballendurchmessern auf.

Das Stellmittel 22 weist in dem in Figur 3 beschriebenen Ausführungsbeispiel zusätzlich einen Stellarm 28 mit Ausnehmungen 29 auf, die für eine Arretierung des Begrenzungselements 23 in den beschriebenen unterschiedlichen Winkelpositionen bezüglich des Spannarms 19 Sorge tragen. Hierfür greift eine nicht näher bezifferte Befestigung, die am Begrenzungselement 23 angebracht ist, lösbar in die Ausnehmungen 29 ein und arretiert somit das Begrenzungselement 23 in den verschiedenen Positionen.

Die Messvorrichtung 30 umfasst in diesem Ausführungsbeispiel einen Hebelarm 31, ein an dem Gehäuse angeordnetes Federelement 33 sowie als Verbindungen 34 bezeichnete Signalübertragungselemente. Während des Endes der Ballenformphase gelangt das Begrenzungselement 23 in Anlage mit einem Hebelarm 31 des Widerlagers 24. Dieser Hebelarm 31 ist mittels einer Drehachse 32 teilweise drehbar gelagert und an seinem dem Anlagepunkt des Begrenzungselement 23 entgegengesetzten Ende an einer gehäusefest abgestützten Feder 33 aufgehängt. Die gehäusefest abgestützte Feder 33 nimmt die vom Hebelarm 31 und von dem Begrenzungselement 23 übertragene Kraft in Form des anliegenden, auf den Hebelarm 31 wirkenden Drehmoments auf und leitet diese bei einer gewissen geringen Auslenkung ihrerseits in das Gehäuse der Maschine weiter. Die Auslenkung der Feder ist proportional zu der vom Begrenzungselement 23 übertragenen Kraft. Mit Hilfe eines Signalübertragungselementes 34 wird so die dem Pressdruck bzw. der Spannung der Ballenformeinrichtung 2 entsprechende Auslenkung der Feder 33 auf ein Anzeigegerät für das Bedienpersonal der erfindungsgemäßen Maschine 1 übertragen. Ersichtlich handelt es sich hierbei also um eine mechanische Messvorrichtung 30.

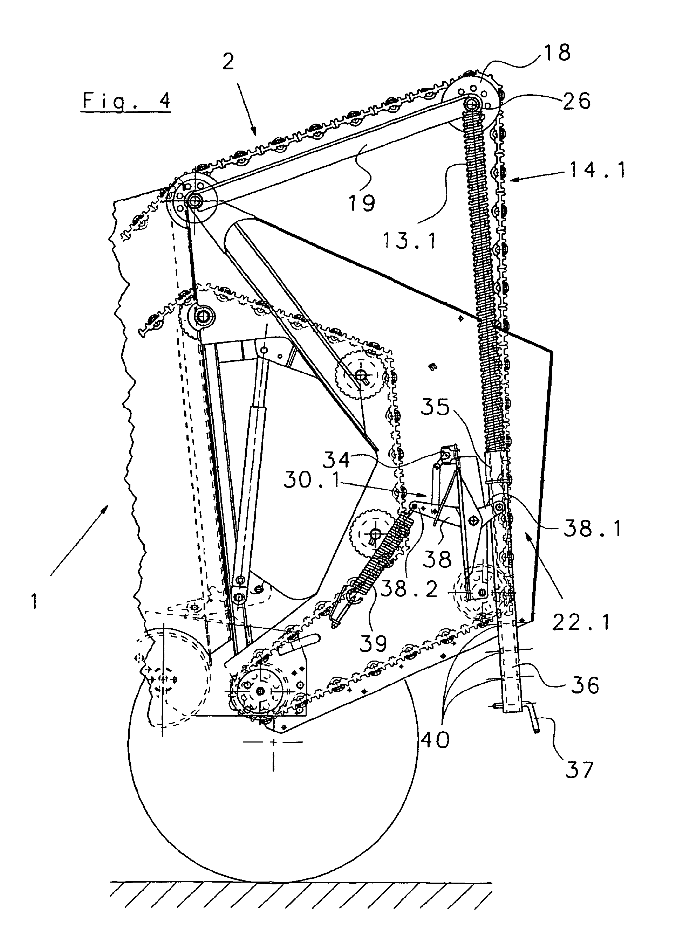

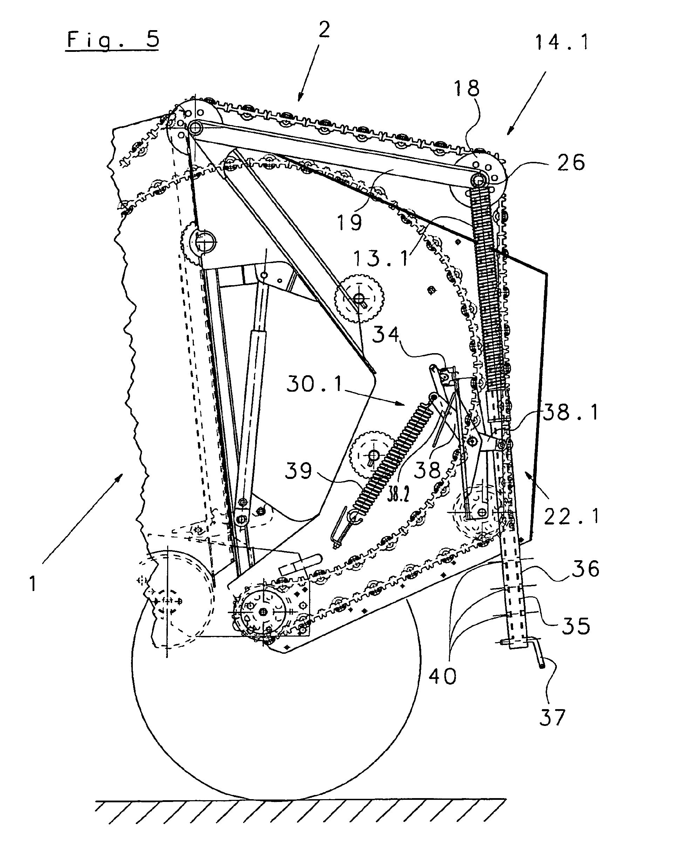

In den Figuren 4 und 5 wird eine weitere Ausführungsform einer Maschine zum Aufnehmen und Pressen von landwirtschaftlichem Erntegut näher veranschaulicht, bei der eine Messvorrichtung 30.1 zur Ermittlung von Ballenkenngrößen bereits während der Ballenformphase aktivierbar ist, so dass damit die Befüllung der Wickelkammer bzw. die Bildung des Rundballens während der Ballenformphase bis zur vorgegebenen Ballengröße insbesondere bei kleinen Erntegutschwaden verbessert ist. Wie aus den Figuren 4 und 5 hervorgeht, wird bei dieser Ausführungsform die Ballenformeinrichtung 2 mit Hilfe eines Kraftspeichers 13.1 des Speichers 14.1 unter Spannung gehalten. Der Kraftspeicher 13.1 ist hier direkt im Bereich der Umlenkrolle 18 an den Spannarm 19 angelenkt. Zur Vorgabe des gewünschten Ballendurchmessers während der Ballenformphase und zur Führung des Kraftspeichers 13.1 ist dem Speicher ein Stellmittel 22.1 zugeordnet, welches aus einer Druckstange 35 besteht, die sich innerhalb der Windungen des als Druckfeder ausgebildeten Kraftspeichers 13.1 erstreckt und sich in einem Rohrelement 36 fortsetzt. Die Auswahl der jeweiligen Ballendurchmesser erfolgt über einen Steckbolzen 37, der in eine von mehreren Querbohrungen 40 des Rohrelementes einsetzbar ist und somit ein weiteres Einschieben der Druckstange 35 in das Rohrelement 36 verhindert. Ein Schwenkhebel 38 der Messvorrichtung 30.1, der schwenkbeweglich am Gehäuse der Maschine 1 angebracht ist, sorgt über einen ersten Hebelarm 38.1 für die Halterung des Rohrelementes 36, während am Ende eines zweiten Hebelarmes 38.2 eine Zugfeder 39 angreift, deren Zugkraft verstellbar ist. Die Kraftverhältnisse an dieser Messvorrichtung 30.1 sind erfindungsgemäß so gestaltet, dass bereits während der Ballenformphase eine Auslenkung des Hebelarms 38.2 des Schwenkhebels 38 aus seiner Ausgangslage erfolgt, welche dieser bei leerer Wickelkammer einnimmt. Die Messgröße, die in der Ballenformphase von der Messvorrichtung 30.1 ermittelt wird, entspricht einer Ballenkenngröße, die dem Ballendurchmesser entspricht. Der Zeitpunkt, wann eine Aktivierung der Messvorrichtung 30.1 erfolgt, kann durch Variierung der Kräfteverhältnis der Federkräfte der Federn 13.1 und 39 bzw. der Längenverhältnisse der Hebelarme 38.1 und 38.2 beeinflusst werden.

Auch hier ist wiederum vorgesehen, die gewonnenen Ballenkenngrößen durch Signalübertragungselemente 34 an geeignete Ausgabe- oder Anzeigegeräte weiterzuleiten.

Statt der Auslenkung einer Feder 33 und 39 der Messvorrichtungen 30, 30.1 können im Rahmen der Erfindung auch andere, eine Längenveränderung aufweisende und/oder komprimierbare Elemente verwendet werden, beispielsweise Gaszylinder.

Es liegt auch im Rahmen der Erfindung, wenn die Messvorrichtung 30, 30.1 , die Teil des Stellmittels 22, 22.1 ist, welches bei Erreichen eines vorgegebenen Durchmessers des Erntegutballens die weitere Freigabe von Ballenformeinrichtung 2 begrenzt, nicht mechanische sondern beispielsweise elektro-mechanische Elemente aufweist. Hierbei könnte es sich beispielsweise um DMS-Elemente handeln, die an dem Begrenzungselement 23 (Fig. 3) oder an der Druckstange 35 (Fig. 4,5) einen Druck aufnehmen können.

Ebenso, wie die Messvorrichtung 30, 30.1 mechanische oder elektro-mechanische Komponenten aufweisen kann, ist die zumindest eine Verbindung der Messvorrichtung 30, 30.1 mit einer Anzeigeeinheit eine mechanische oder auch eine elektrische. Für letztere wird das mechanische Signal in ein elektrisches umgewandelt, welches dann zu einer Anzeigeeinheit für das Bedienpersonal weitergeleitet werden kann. Ein wesentlicher Vorteil der dargestellten Messvorrichtung 30, 30.1 liegt hierbei in der Einfachheit ihrer Konstruktion und somit in ihrer kostengünstigen Herstellung.

## Patentansprüche

1. Maschine zum Aufnehmen und Pressen von landwirtschaftlichem Erntegut, wie beispielsweise Heu, Gras oder dgl., mit einer von zumindest einer Ballenformeinrichtung (2) gebildeten, aufklappbaren Wickelkammer (3) zur Erzeugung eines rollenförmigen Erntegutballens, wobei die Ballenformeinrichtung (2) über zumindest eine ortsfeste Antriebsrolle (7) geführt ist und während einer Ballenformphase eine Wickelkammer (3) ausbildet, welche sich von einer ein geringes Volumen an Erntegut aufnehmenden Größe in eine ein größeres Volumen aufnehmende Größe ausdehnen kann, mit mindestens einer Messvorrichtung zur Ermittlung von Ballenkenngrößen, **dadurch gekennzeichnet, dass** nach der Ballenformphase auf den Erntegutballen in der Wickelkammer (3) in einer anschließenden Verdichtungsphase eine Verdichtungskraft von außen nach innen durch die Ballenformeinrichtung (2) ausgeübt wird und dass die Messvorrichtung (30, 30.1) automatisch aktivierbar ist und Teil eines Stellmittels (22, 22.1) ist, welches ein Begrenzungselement (23) und ein Widerlager (24) als gehäusefeste Abstützung umfasst und nach Abschluss der Ballenformphase des Emtegutballens in der Verdichtungsphase die weitere Freigabe der Ballenformeinrichtung (2) aus einem Speicher (14) begrenzt und dass der Zeitpunkt einer Aktivierung der Messvorrichtung (30, 30.1) zur Ermittlung von Ballenkenngrößen innerhalb eines Zeitraumes liegt, der bereits während der Ballenformphase beginnt und sich bis zum Ende der Ballenformphase erstreckt.

2. Maschine nach Anspruch 1, **dadurch gekennzeichnet, dass** die Messvorrichtung (30, 30.1) Teil einer gehäusefesten Abstützung ist.

3. Maschine nach einem der Ansprüche 1 oder 2, **dadurch gekennzeichnet, dass** die Messvorrichtung (30, 30.1) zur Aufnahme einer von der Ballenformeinrichtung (2) über eine Umlenkrolle (18) eines Spannarms (19) ausgeübten Kraft ausgebildet ist.

4. Maschine nach einem der Ansprüche 1 oder 2, **dadurch gekennzeichnet, dass** die Messvorrichtung (30.1) zur Aufnahme eines der Ballengröße proportionalen Ballenkenngröße verwendbar ist.

5. Maschine nach Anspruch 3, **dadurch gekennzeichnet, dass** die Messvorrichtung (30) im Bereich der Umlenkrolle (18) angeordnet ist.

6. Maschine nach einem der Ansprüche 1 bis 5, **dadurch gekennzeichnet, dass** der Speicher (14) zumindest zwei voneinander beabstandete Messvorrichtungen (30, 30.1) zur Aufnahme lokal unterschiedlicher Ballenkenngrößen aufweist.

7. Maschine nach einem der Ansprüche 1 bis 6, **dadurch gekennzeichnet, dass** die Messvorrichtung (30, 30.1) ein Federelement (33, 33.1) aufweist und über mechanische und/oder elektrische Verbindungen (34) eine Anzeige ansteuert.

8. Maschine nach einem der Ansprüche 1 bis 7, **dadurch gekennzeichnet, dass** die Messvorrichtung (30, 30.1) einen Hebelarm (31, 31.1) aufweist.

9. Maschine nach einem der Ansprüche 1 bis 8, **dadurch gekennzeichnet, dass** die Messvorrichtung (30, 30.1) elektromechanisch ausgebildet ist.

10. Maschine nach einem der Ansprüche 1 bis 9, **dadurch gekennzeichnet, dass** die Messvorrichtung (30, 30.1) Mittel zur Anzeige und/oder Speicherung und/oder Übermittlung von Ballenkenngrößen aufweist.

11. Maschine nach einem der Ansprüche 1 bis 10, **dadurch gekennzeichnet, dass** die von der Messvorrichtung (30, 30.1) ermittelte Ballenkenngröße während der Verdichtungsphase dem Pressdruck entspricht.

12. Maschine nach einem der Ansprüche 1 bis 10, **dadurch gekennzeichnet, dass** die von der Messvorrichtung (30, 30.1) ermittelte Ballenkenngröße während der Ballenformphase eine dem Ballendurchmesser entsprechende Größe ist.

## Claims

1. Machine for picking up and pressing of harvested agricultural crop, for example hay, grass or the like, with a bale-forming chamber (3) which comprises a rear flap able to be folded up, the bale-forming chamber (3) being formed from at least one baling device (2), for producing a roll-shaped harvested crop bale, wherein the baling device (2) is guided by at least one fixed drive roll (7) and during a baling phase forms a bale-forming chamber (3) which is able to expand from a size receiving a small volume of harvested crop into a size receiving a larger volume, with at least one measuring device for determining bale characteristics, **characterised in that** a compressive force is exerted from the outside to the inside by the baling device (2) after the baling phase on the harvested crop bale in the bale-forming chamber (3) in a subsequent compression phase, and **in that** the measuring device (30, 30.1) can be activated automatically and is part of an adjusting means (22,22.1) comprising a limiting element (23) and an abutment (24) as a support secured to the housing, the adjusting means (22, 22.1) limiting the further release of the baling device (2) from an accumulator (14) after completion of the baling phase of the harvested crop bale in the compression phase, and **in that** the time of an activation of the measuring device (30, 30.1) for determining bale characteristics lies within a period of time which already commences during the baling phase and extends to the end of the baling phase.

2. The machine according to claim 1, **characterised in that** the measuring device (30, 30.1) is part of a support secured to the housing.

3. The machine according to any one of claims 1 or 2, **characterised in that** the measuring device (30, 30.1) is designed to record a force exerted by the baling device (2) via a deflector roll (18) of a clamping arm (19).

4. The machine according to any one of claims 1 or 2, **characterised in that** the measuring device (30.1) can be used to record a bale characteristic proportional to the bale size.

5. The machine according to claim 3, **characterised in that** the measuring device (30) is arranged in the region of the deflector roll (18).

6. The machine according to any one of claims 1 to 5, **characterised in that** the accumulator (14) has at least two measuring devices (30, 30.1) arranged at a distance from one another for recording locally different bale characteristics.

7. The machine according to any one of claims 1 to 6, **characterised in that** the measuring device (30, 30.1) has a spring element (33, 33.1) and actuates a display by means of mechanical and/or electrical connections (34).

8. The machine according to any one of claims 1 to 7, **characterised in that** the measuring device (30, 30.1) has a lever (31, 31.1).

9. The machine according to any one of claims 1 to 8, **characterised in that** the measuring device (30, 30.1) is designed as an electromechanical device.

10. The machine according to any one of claims 1 to 9, **characterised in that** the measuring device (30, 30.1) has means for indicating and/or storing and/or transmitting bale characteristics.

11. The machine according to any one of claims 1 to 10, **characterised in that** the bale characteristic determined by the measuring device (30, 30.1) corresponds to the pressing power during the compression phase.

12. The machine according to any one of claims 1 to 10, **characterised in that** the bale characteristic determined by the measuring device (30, 30.1) is a value corresponding to the bale diameter during the baling phase.

## Revendications

1. Machine pour ramasser et comprimer des produits agricoles de récolte tels que par exemple du foin, de l'herbe ou produits analogues, comportant une chambre d'enroulement (3) s'ouvrant par déploiement, constituée par au moins une installation de formation de balle (2), pour réaliser une balle de produits de récolte en forme de rouleau,
l'installation de formation de balle (2) étant guidée sur au moins un rouleau d'entraînement (7) fixe et au cours d'une phase de formation de balle, l'installation réalise une chambre d'enroulement (3) qui peut se développer à partir d'une dimension recevant un faible volume de produits de récolte jusqu'à une dimension recevant un plus grand volume, et ayant au moins un dispositif de mesure pour déterminer la grandeur caractéristique des balles,
**caractérisée en ce qu'**
après la phase de formation de balle, une force de compression est exercée de l'extérieur vers l'intérieur par l'installation de formation de balle (2) sur la balle de produits de récolte dans la chambre d'enroulement (3), pour une phase de compression consécutive, et
le dispositif de mesure (30, 30.1) est activé automatiquement et fait partie d'un moyen de réglage (22, 22.1) comprenant un élément de limitation (23) et un appui (24) comme appui solidaire du carter et à la fin de la phase de formation de la balle de produits de récolte, dans la phase de compression, il limite la suite de la libération de l'installation de formation de balle (2) à partir d'un accumulateur (14) et
l'instant de l'activation du dispositif de mesure (30, 30.1) pour déterminer la dimension caractéristique des balles se situe dans une période qui commence déjà au cours de la phase de formation de la balle et s'étend jusqu'à la fin de la phase de la formation de la balle.

2. Machine selon la revendication 1,
**caractérisée en ce que**
le dispositif de mesure (30, 30.1) fait partie d'un appui solidaire du boîtier.

3. Machine selon l'une des revendications 1 ou 2,
**caractérisée en ce que**
le dispositif de mesure (30, 30.1) est réalisé pour recevoir une force exercée par l'installation de formation de balle (2) par l'intermédiaire du galet de renvoi (18) d'un bras de tension (19).

4. Machine selon l'une des revendications 1 ou 2,
**caractérisée en ce que**
le dispositif de mesure (30.1) est utilisable pour recevoir une dimension caractéristique de balle proportionnelle à la dimension des balles.

5. Machine selon la revendication 3,
**caractérisée en ce que**
le dispositif de mesure (30) est disposé dans la région du galet de renvoi (18).

6. Machine selon l'une des revendications 1 à 5,
**caractérisée en ce que**
l'accumulateur (14) comporte au moins deux dispositifs de mesure (30, 30.1) distants l'un de l'autre pour recevoir des dimensions caractéristiques de balle localement différentes.

7. Machine selon l'une des revendications 1 à 6,
**caractérisée en ce que**
le dispositif de mesure (30, 30.1) comporte un élément de ressort (33, 33.1) et commande un moyen d'affichage par l'intermédiaire de liaisons mécaniques et/ou électriques (34).

8. Machine selon l'une des revendications 1 à 7,
**caractérisée en ce que**
le dispositif de mesure (30, 30.1) comporte un bras de levier (31, 31.1).

9. Machine selon l'une des revendications 1 à 8,
**caractérisée en ce que**
le dispositif de mesure (30, 30.1) est un dispositif électromécanique.

10. Machine selon l'une des revendications 1 à 9,
**caractérisée en ce que**
le dispositif de mesure (30, 30.1) comporte des moyens pour afficher et/ou mémoriser et/ou transmettre des grandeurs caractéristiques de balle.

11. Machine selon l'une des revendications 1 à 10,
**caractérisée en ce que**
la dimension caractéristique de balle transmise par le dispositif de mesure (30, 30.1) au cours de la phase de compression correspond à la pression de compression.

12. Machine selon l'une des revendications 1 à 10,
**caractérisée en ce que**
la dimension caractéristique de balle déterminée par le dispositif de mesure (30, 30.1) au cours de la phase de formation de balle est une grandeur correspondant au diamètre de la balle.
